# EUROPEAN PATENT APPLICATION

(11) **EP 3 528 183 A1**
(43) Date of publication of application: **21.08.2019**
(21) Application number: 19169354.8
(22) Date of filing: 29.04.2016
(51) Int. Cl.: G06Q 10/00

(54) **DISPLAY APPARATUS, SYSTEM AND CONTROL METHOD THEREOF**

(30) Priority: 30.04.2015 KR 20150061059
(62) Divisional of application: 16167732.3
(71) Applicant: Samsung Electronics Co., Ltd., Suwon-si, Gyeonggi-do, 16677 (KR)
(72) Inventor: LEE, Seung Hyo, 16822 Gyeonggi-do (KR)
(74) Representative: Hewett, Jonathan Michael Richard

(57) **Abstract**

A display apparatus for purchasing and executing a paid application, and a system and control method thereof, includes: a communicator configured to communicate with an external apparatus; a memory configured to store an application therein; and at least one processor configured to store in the memory an application, which is received from the external apparatus through the communicator, in response to a user command for selecting the application stored in the memory to be executed, determine whether the selected application has been purchased based on a user's purchase history, and execute the purchased application in the display apparatus according to a result of the determination on the purchase or non-purchase of the selected application. Thus, if a user selects to execute the downloaded application, it is determined whether the selected application has been purchased, and only the purchased application is executed in the display apparatus, thereby improving efficiency of management and minimizing cost for establishing server to manage purchase history.

## Description

The present invention relates to an execution of an application in a display apparatus, and more particularly, to a display apparatus for purchasing and executing a paid application that has been downloaded from outside, and a system and control method thereof.

A display apparatus including a smart TV, smart phone and tablet, etc., may have its functions modified and/or extended through various applications. A user may access a server such as an app store (e.g., an external apparatus) through a display apparatus and download a free or paid application from the app store.

In purchasing a paid application and using the application in a display apparatus, both In-App Purchase (IAP) and pay to play (PTP) may be used.

In a case of an IAP, a user downloads an application at no cost and then pays for a desired content and obtains the authorization to use the content while he/she uses the application. In a case of a PTP, a user completes payment for an application before downloading it, and downloads the paid application to a display apparatus and uses it.

However, in a case of a PTP, for a user to pay for an application before downloading it, an application purchase history and payment for applications should be managed and made at the app store. Thus, a company which develops and operates the app store may have to bear abundant development and operation costs to maintain a desirable environment.

While the PTP is managed through the app store, the IAP is managed at a server separately from the app store and, thus, is less efficient in terms of management. This also applies to a management page of the application developer and may cause inconvenience.

The purchase history is managed at the downloading step at the app store, and thus, it may be difficult to manage the application after downloading it. If the paid application that has been downloaded is illegally copied to another device, it may be difficult to monitor or sanction such illegal usage.

According to an aspect of an exemplary embodiment of the present invention, there is provided a display apparatus including: a communicator configured to communicate with an external apparatus; a memory configured to store an application; and at least one processor configured to: control the communicator to receive an application from the external apparatus; store the received application in the memory; in response to receiving a user command selecting the application stored in the memory to be executed, determine whether the selected application has been purchased based on a user's purchase history; and in response to determining that the selected application has been purchased, execute the selected application in the display apparatus. Thus, a server providing the application does not need to manage the purchase history, thereby improving efficiency of management.

The user's purchase history may be stored in at least one of a purchase history server and the memory, wherein the user's purchase history may include a purchase history of a paid application including at least one of an In-App Purchase (IAP) and a Pay To Play (PTP). Thus, the purchase history server which manages the user's purchase history of applications manages paid applications of the IAP type and PTP type, thereby providing application developers and server managers with improved usability and convenience.

The processor may be further configured to, in response to determining that the selected application has not been purchased, stop running the selected application and control the communicator to proceed with a payment process for the selected application through a payment server. Thus, an application which has not been properly paid for may be restricted from being run on the display apparatus, thereby preventing a purchased application from being illegally copied to another device.

The processor may be further configured to, in response to the payment process for the application being completed, resume running the application in the display apparatus. Thus, the immediate payment and execution of an unpaid application may be performed, ensuring user's convenience in using the display apparatus.

The processor maybe further configured to maintain the application in a stopped state in the display apparatus if the payment process for the application fails or is cancelled. Thus, there may be an effect of fundamentally blocking the running of the application the purchase of which has not been completed for a predetermined reason.

The display apparatus may further include: a display, wherein the processor may be further configured to, in response to determining that the selected application has not been purchased, control the display to display a payment screen for the application. Thus, a user may conveniently perform the payment process viewing a screen.

The payment screen may include a graphical user interface (GUI) that may be capable of receiving a user selection for payment or non-payment for the selected application, and the processor may be further configured to, in response to receiving a user selection for non-payment for the selected application, stop running the selected application. Thus, payment which is against a user's intent may be prevented.

The display apparatus further including: a display, wherein the processor may be further configured to control the display to display a graphical user interface (GUI) corresponding to a user's purchase history. Thus, a user may easily confirm his/her purchase history.

The external apparatus may include a content server configured to store a plurality of applications; a purchase history server configured to store a purchase history of applications per user; and a payment server configured to support a payment process for the application, wherein the processor may be further configured to control the communicator to receive the selected application from the content server. Thus, the content server does not need to separately manage a purchase history of paid applications, thereby reducing the cost of establishing the app store.

The processor may be further configured to, in response to receiving, after the application is stored in the memory, the user command selecting the application to be executed, determine whether the selected application has been purchased. Thus, if the purchase of the application is completed at the time when it is run, the purchased application maybe freely used from then on.

According to an aspect of an exemplary embodiment of the present invention, there is provided a control method of a display apparatus, the method including: receiving an application from an external apparatus; storing the received application in a memory; in response to receiving a user command selecting the application stored in the memory to be executed, determining whether the selected application has been purchased based on a user's purchase history; and in response to determining that the selected application has been purchased, executing the selected application in the display apparatus. Thus, a server providing the application does not need to manage the purchase history, thereby improving efficiency of management.

The user's purchase history may be stored in at least one of a purchase history server and the memory, wherein the user's purchase history may include a purchase history of a paid application including at least one of an In-App Purchase (IAP) and a Pay To Play (PTP). Thus, the purchase history server which manages the user's purchase history of applications manages paid applications of the IAP type and PTP type, thereby providing application developers and server managers with improved usability and convenience.

The control method may further include: in response to determining that the selected application has not been purchased, stopping running the application and proceeding with a payment process for the selected application through a payment server. Thus, an application which has not been properly paid for is restricted from being run on the display apparatus, thereby preventing a purchased application from being illegally copied to another device.

The control method may further include: in response to the payment process for the application being completed, resuming running the application in the display apparatus. Thus, the immediate payment and execution of an unpaid application may be performed, ensuring user's convenience in using the display apparatus.

The control method may further include: maintaining the application in a stopped state in the display apparatus if the payment process for the application fails or is cancelled. Thus, there may be an effect of fundamentally blocking the running of the application the purchase of which has not been completed for a predetermined reason.

The control method may further include: displaying, in response to determining that the selected application has not been purchased, a payment screen for the application. Thus, a user may conveniently perform the payment process viewing a screen.

The payment screen may include a graphic user interface (GUI) that is capable of receiving a user selection for payment or non-payment of the selected application, and may further include: in response to receiving a user selection for non-payment for the selected application, stopping running the selected application. Thus, payment which is against a user's intent may be prevented.

The control method may further include: displaying a graphical user interface (GUI) corresponding to the user's purchase history. Thus, a user may easily confirm his/her purchase history.

The external apparatus may include a content server for storing a plurality of applications, a purchase history server for storing a purchase history of applications per user, and a payment server for supporting a payment process for the application, and the receiving the application may include receiving the selected application from the content server. Thus, the content server does not need to separately manage a purchase history of paid applications, thereby reducing the cost of establishing the app store.

The control method may further include: in response to receiving, after the application is stored in the memory, the user command selecting the application to be executed, determining whether the selected application has been purchased. Thus, if the purchase of the application is completed at the time when it is run, the purchased application maybe freely used from then on.

According to an aspect of an exemplary embodiment of the present invention, there is provided a system including a display apparatus and at least one server, the system including: the at least one server including a content server, a purchase history server and a payment server, and the display apparatus including a communicator configured to communicate with the at least one server; a memory configured to store an application that has been provided by the content server through the communicator; and at least one processor configured to: in response to receiving a user command selecting the application stored in the memory to be executed, determine whether the selected application has been purchased based on a user's purchase history that is stored in the purchase history server; in response to determining that the selected application has not been purchased, stop running the application; and control the communicator to proceed with a payment process for the selected application through the payment server. Thus, a server providing the application does not need to manage the purchase history, thereby improving efficiency of management. Also, the immediate payment and execution of an unpaid application is performed, ensuring user's convenience in using the display apparatus.

The purchase history server may be configured to manage a user's purchase history including a purchase history of paid applications including at least one of an In-App Purchase (IAP) and a Pay To Play (PTP). Thus, the purchase history server which manages the user's purchase history of applications manages paid applications of the IAP type and PTP type, thereby providing application developers and server managers with improved usability and convenience.

The processor may be further configured to, in response to determining that the selected application has been purchased, execute the application in the display apparatus. Thus, there may be an effect of fundamentally blocking the running of the application the purchase of which has not been completed for a predetermined reason.

The above and/or other aspects will become apparent and more readily appreciated from the following description of exemplary embodiments, taken in conjunction with the accompanying drawings, in which:
FIG. 1 illustrates a configuration of a system including a display apparatus according to an exemplary embodiment;
FIG. 2 is a block diagram of a display apparatus according to an exemplary embodiment;
FIG. 3 illustrates an operation of a controller that is performed to execute an application according to an exemplary embodiment;
FIG. 4 illustrates a related art operation for executing an application;
FIGS. 5 to 17 illustrate screens that are displayed by a display in the process of receiving and executing an application in a display apparatus according to one or more exemplary embodiments;
FIG. 18 illustrates an operation of a display apparatus according to an exemplary embodiment;
FIG. 19 illustrates an operation of a display apparatus according to another exemplary embodiment; and
FIG. 20 is a flowchart of showing a control method of a display apparatus according to an exemplary embodiment.

Below, exemplary embodiments of the present invention will be described in detail with reference to accompanying drawings.

Exemplary embodiments described below may be variously modified. The present invention is not limited to the exemplary embodiments disclosed in the accompanying drawings, and it should be understood that the present invention includes any equivalents and substitutions that are included within the scope of the claims. In the present disclosure, well-known element structures and technologies may not be described in detail if they would obscure the present disclosure with unnecessary detail.

According to one or more exemplary embodiments, the term "module" or "portion", as used herein, may refer to, but is not limited to, a software or hardware component or a combination thereof, which performs tasks. Further, "a plurality of modules or portions" may be integrally formed as at least one module and may be implemented by at least one processor.

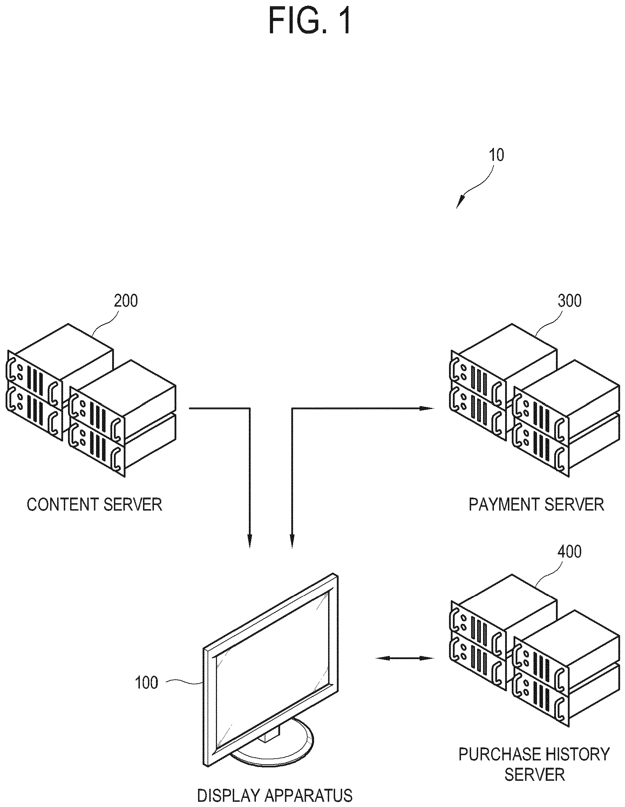

FIG. 1 illustrates a configuration of a system 10 including a display apparatus 100 according to an exemplary embodiment.

The system 10 according to an exemplary embodiment includes a display apparatus 100 that is capable of accessing at least one external apparatus. The at least one external apparatus may include a server. FIG. 1 illustrates an example of the case in which the display apparatus 100 communicates with a plurality of servers, e.g., with a content server 200, a payment server 300, and a purchaser history server 400.

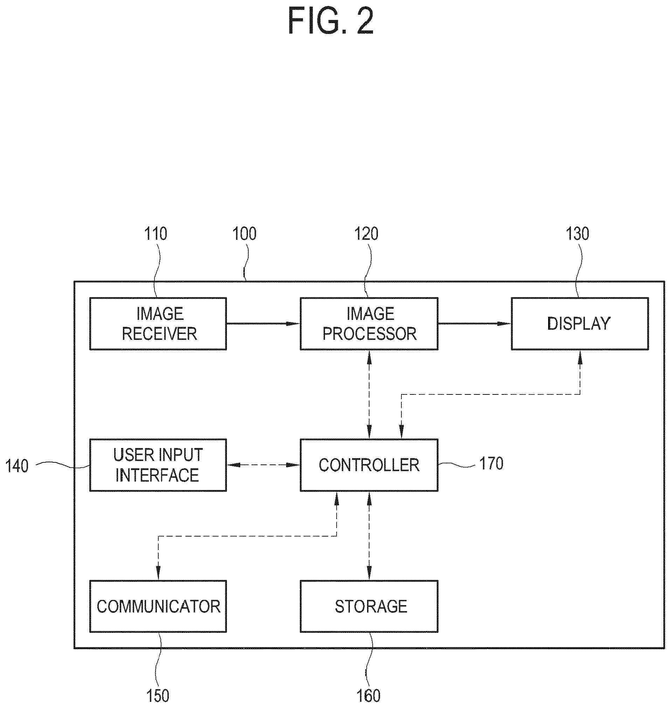

As shown in FIG. 1, the display apparatus 100 according to an exemplary embodiment processes an image signal (e.g., input signal) supplied by an external image source through a preset process and displays the processed image signal as an image in a display 130 (see FIG. 2).

The display apparatus 100, according to an exemplary embodiment, may be achieved by a television (TV) that displays a broadcast image based on a broadcast signal/ broadcast information/broadcast data received from a transmitter of a broadcasting station. However, the kinds of images to be displayable on the display apparatus 100 are not limited to the broadcast image. For example, the display apparatus 100 may display a moving image, a still image, an application, an on-screen display (OSD), a user interface (UI, also referred to as a 'graphic user interface (GUI)') for controlling various operations, etc., based on a signal/data received from various types of image sources.

According to an exemplary embodiment in FIG. 1, the display apparatus 100 may be achieved by a smart TV or an internet protocol (IP) TV. The smart TV is capable of receiving and displaying a broadcast signal in real time, which has a web-browsing function to search and consume various contents through the Internet while displaying the broadcast signal in real time, and thus, provides a convenient user environment.

Further, the smart TV has an open software platform to provide an interactive service to a user. Therefore, the smart TV can provide a user with various contents. For example, the smart TV may provide to a user applications corresponding to predetermined services, through the open software platform. An application may refer to an application program for providing various services (e.g., social network service (SNS), finance, news, weather, maps, music, movie, game, electronic book, etc.,) and may be received, e.g., downloaded, from the content server 200 such as an application store (e.g., an external apparatus to be stored) installed and executed in the display apparatus 100.

An application may include a pre-installed application that is installed in advance in the display apparatus 100, and a user-installed application that is selectively installed by a user.

According to an exemplary embodiment, the case in which the display apparatus 100 receives and executes a user-installed application, which a user has selected to download to the display apparatus 100 from an external apparatus such as an app store, will be described. However, exemplary embodiments are not limited thereto. Additionally, an application that is received from an external apparatus may include an updated version of a pre-installed application.

An application includes a paid application and a free application. The paid application according to an exemplary embodiment includes an application that is purchased through In-App Purchase (IAP) and Pay to Play (PTP) methods.

According to an exemplary embodiment, in response to a user's execution command with respect to a paid application of the PTP type, the application may be controlled to commence its execution according to whether a user has completed the purchase of the application.

FIG. 1 illustrates a TV as an example of the display apparatus 100, but exemplary embodiments are not limited thereto.

The display apparatus 100 may be achieved by a small-sized device or mobile device such as a smart phone, smart pad, e.g., tablet, car navigator, personal digital assistant (PDA), portable media player (MP3 player), etc. A user may select to receive various applications from an external apparatus such as app store to a mobile device.

The display apparatus 100 according to an exemplary embodiment may be achieved by various digital devices, in which applications can be installed, such as a desktop computer, laptop computer, set top box, and set back box, etc.

In the display apparatus 100, that may be achieved by various types of digital devices including a mobile device according to an exemplary embodiment, with respect to a user's execution command for an application, the application may be controlled to commence its execution depending on whether the purchase of the application has been completed.

The content server 200 (e.g., an application market or application store (e.g., app store)) provides various applications that are capable of being executed in a plurality of devices including the display apparatus 100. If a developer develops an application and registers the application with an item management server, the relevant item (e.g., application) is stored and managed in the content server 200 to be provided to the display apparatus 100.

The display apparatus 100 accesses the content server 200 by a user manipulation in a wired or wireless manner, and downloads an application (e.g., a user-installed application or an updated version of a pre-installed application), and the downloaded application is installed and executed in the display apparatus 100.

According to an exemplary embodiment, the display apparatus 100 includes a user information manager, a content manager, a payment manager and a content part. The user information manager may include a user information register and a user information transmitter. The content manager may include a content selector, a content requester and a content executer. The payment manager may include a payment request receiver, a payment information transmitter and a payment result receiver. The content part may include a purchase history confirmer, an app/content progress manager, a payment request transmitter and a payment result receiver.

The user information manager, content manager, payment manager, and content part, and their respective elements have been classified according to operations/functions of the display apparatus 100, and may be included in the elements of the display apparatus 100 in FIG. 2. For example, they may be included in at least one of a user input interface 140, a communicator 150, a storage 160 (e.g., memory), and a controller 170.

For example, the content selector and the payment request receiver may be included in the user input interface 140, and the content requester, the payment request transmitter and the payment result receiver may be included in the communicator 150. The user information register maybe included in the storage 160, and the content executor, the purchase history confirmer and the app/content progress manager may be included in the controller 170.

The content server 200 may be operated by a manufacturer or a mobile carrier of the display apparatus 100. FIG. 1 illustrates that the display apparatus 100 accesses the single content server 200 and downloads an application therefrom, but exemplary embodiments are not limited to this, and the content server 200 may be plurally provided.

The content server 200 may register user information (e.g., user account information) for a user using the display apparatus 100, and may store and manage application information provided to the display apparatus 100 per user, i.e. content supply history.

According to an exemplary embodiment, the content server 200 including a user information register, a content supply history manager and a content provider is described as an exemplary embodiment. The user information register, the content supply history manager and the content provider have been classified according to operations/functions of the content server 200.

A user of the display apparatus 100 may access the content server 200 from the display apparatus 100 through a user log-in. The content supply history manager compares information of a user, who has logged into the display apparatus 100, and information received from the display apparatus 100 with information stored in the user information register, and generates a list of applications that may be supplied to the display apparatus 100 (e.g., a content list) based on a result of the comparison. The content supply history manager may further receive device information (e.g., hardware information and software information) of the display apparatus 100 and generate a list of available applications that may be supplied corresponding to the relevant device. The generated list of available applications is transmitted to the display apparatus 100.

A user may confirm the list of available applications through the display apparatus 100 and may make a request for downloading an application to the display apparatus 100. The content server 200 receives such request from a user and transmits a corresponding application to the display apparatus 100 through the content provider.

The payment server 300 provides a payment service regarding a purchase of an application. More specifically, the payment server 300 receives a payment request message (or approval request message) from the display apparatus 100 for purchasing a predetermined application, and based on the received message, performs a payment process for purchasing the application. As a result of the payment process, a result message indicating a payment success or payment failure is transmitted to the display apparatus 100.

The payment request message and the result message include security data (e.g., credit card information and security code information), and the security data may be encrypted by a predetermined encryption module (e.g., an encryption key) to be included in a message.

The payment server 300, according to an exemplary embodiment, may include a payment service provider (PSP) server with respect to a transaction between a seller (e.g., an operator of the content server 200) and a purchaser (e.g., a user of the display apparatus 100). The operator of the payment server 300 may include a credit card company, bank, mobile carrier, etc.

According to an exemplary embodiment, the payment server 300 may include a payment request receiver, a payment processor, a payment result transmitter and a user information register. The payment request receiver, the payment processor, the payment result transmitter and the user information register have been classified according to operations/functions of the payment server 300.

A payment request message that has been sent by the display apparatus 100 through the payment request receiver may be transmitted together with user information stored in the user information register (including a user's security code information) to the payment processor, and payment may be accepted or refused by the payment processor based on the information. A payment result of the payment processor is transmitted to the display apparatus 100 and the purchase history server 400 through the payment result transmitter.

The purchase history server 400 stores therein a user's purchase history of applications. The purchase history server 400, according to an exemplary embodiment, may receive information regarding a user's application purchase from the content server 200 and the payment server 300, and store and manage a purchase history of applications per user account. That is, if a payment for a predetermined application is approved by the payment server 300, relevant information (e.g., payment result) is transmitted to the purchase history server 400, and a purchase history of the relevant user stored in the purchase history server 400 is updated by reflecting the transmitted information.

The application managed as the purchase history includes a paid application for which payment should be made. Accordingly, if an execution command for a predetermined application is input to the display apparatus 100, the display apparatus 100 may access the purchase history server 400 and confirm whether the application has been purchased, i.e., whether the application has been paid for, and the application for which the payment has been confirmed is executed in the display apparatus 100.

According to an exemplary embodiment, if the same user uses two or more display apparatuses (e.g., if a user uses a smart TV and a smart phone through the same user account), application purchase lists for each of the two devices may be linked, stored and managed per user account. Thus, even if the same application is downloaded to and executed by different devices, a double payment is prevented.

According to an exemplary embodiment, the purchase history server 400 may include a purchase history confirmation request receiver, a purchase history information transmitter, a purchase history manager, and a user information register. The purchase history confirmation request receiver, the purchase history information transmitter, the purchase history manager and the user information register have been classified according to operations/functions of the purchase history server 400.

The purchase history manager receives information relating to a user's application purchase from at least one of the content server 200 and the payment server 300, and stores and manages such information. The purchase history confirmation request receiver receives from the display apparatus 100 a request for confirming whether a purchase of a predetermined application has been completed, when the predetermined application is executed. Based on data stored in the purchase history manager and the user information register, the purchase history server 400 determines whether the purchase of the application has been completed, and transmits the determination result to the display apparatus 100 through the purchase history information transmitter.

The display apparatus 100 receives a result of the completion or non-completion of the purchase of the application through the payment result receiver, and the app/content progress manager runs the application, which has been purchased, in the display apparatus 100 according to the result. If the payment result indicates a non-purchase, the app/content progress manager may stop running the application and may request for an ending of, or payment for, the application according to a user's selection.

According to an exemplary embodiment, the servers 200, 300 and 400 maybe achieved by different and independent servers as illustrated in FIG. 1. However, two or more of the servers 200, 300 and 400 may be integrated for operation. If the servers 200, 300 and 400 are constructed as independent servers, they may transmit and receive data to each other through communication.

The servers 200, 300 and 400, whether they have the same operating entity or at least two of them have different operating entities, are included in one or more exemplary embodiments. If the servers 200, 300 and 400 have the same operator, the payment server 300 may access an external payment service provider to perform a payment process.

Exemplary embodiments described below are examples variously applicable in accordance with the types of apparatuses/ systems, and do not limit the present disclosure.

Below, a detailed configuration of the display apparatus 100 will be described.

FIG. 2 is a block diagram of the display apparatus 100 according to an exemplary embodiment.

As shown therein, the display apparatus 100 includes an image receiver 110 for receiving an image signal, an image processor 120 for processing an image signal received by the image receiver 110, a display 130 for displaying an image based on an image signal processed by the image processor 120, a user input interface 140 for receiving a user input, a communicator 150 for communicating with the exterior, a storage 160 for storing data therein, and a controller 170 for controlling the display apparatus 100.

The image receiver 110 receives an image signal and transmits it to the image processor 120. The image receiver 110 may be variously achieved in accordance with formats of the received image signal and the types of the display apparatus 100. For example, the image receiver 110 may receive a radio frequency (RF) signal from a broadcasting station wirelessly, or may receive an image signal of composite video, component video, super video, SCART, high definition multimedia interface (HDMI) standards by a wire. The image receiver 110 may include a tuner to be tuned to a channel corresponding to a broadcast signal if the image signal is the broadcast signal.

The image signal may be received from an external apparatus. For example, the image signal may be output from a personal computer (PC), an audio/video (AV) system, a smart phone, a smart pad, or similar external apparatus. In addition, the image signal may be based on data received through the Internet or other network. In this case, the display apparatus 100 may perform network communication through the communicator 150, or may further include a separate network communicator. The image signal may be based on data stored in the storage 160 that is non-volatile like a flash memory, a hard disk drive, etc. The storage 160 may be provided inside or outside the display apparatus 100. If the storage 160 is provided outside the display apparatus 100, a connector may be provided to connect with the storage 160.

The image processor 120 performs various image processing processes previously set with respect to an image signal. The image processor 120 outputs the processed image signal to the display 130, thereby displaying an image on the display 130 based on the image signal.

There is no limit to the kind of image processing processes performed by the image processor 120. For example, the image processing processes may include decoding corresponding to various image formats, de-interlacing, frame refresh rate conversion, scaling, noise reduction for improving image quality, detail enhancement, line scanning, etc. The image processor 120 may be achieved by an individual group for independently performing each of the processes, or may be achieved by a system-on-chip (SoC) in which various functions corresponding to such processes are integrated. For example, the display apparatus 100 may have an image processor 120 that is achieved by an image processing board including various chipsets and memories to perform the foregoing image processing processes.

Image processing may refer to processing an input image signal through the image processor 120 or the controller 170, i.e., a processor for its intended purpose, and includes both analog signal processing and digital signal processing. Below, the image processing refers to a digital processing of an image, but exemplary embodiments are not limited to this. The image processing may include at least one of point processing, area processing, geometric processing and frame processing. The point processing processes each pixel based on a location of the pixel. The area processing may change a pixel value based on an original value of a pixel and a value of a neighboring pixel. The geometric processing may change a location or arrangement of pixels. The frame processing may change pixel values based on calculation of two or more images. Unless otherwise stated, the image processing refers to the point processing.

The display 130 displays an image based on an image signal processed by the image processor 120.

The display 130 may, for example, be achieved by liquid crystal, plasma, a light emitting diode (LED), an organic light-emitting diode (OLED), a surface-conduction electron-emitter, a carbon nano-tube (CNT), nano-crystal, and other similar displays, without limitation.

The display 130 may include additional elements in accordance with its types.

In the display apparatus 100, according to an exemplary embodiment, the display 130 includes a panel for displaying an image and a light source (e.g., backlight) for supplying light to the panel. The light source may include an LED. The display 130 may include a driver for driving the panel/light source.

The light source includes at least one of an edge type, which is arranged in at least one edge of a panel, and a direct type, which is arranged in a rear surface of the panel. The driver may be achieved by an independent printed circuit board (PCB) in which at least one circuit device is provided, as an example of a light source driver. According to an exemplary embodiment, the light source and the driver may be achieved as a single device. The driver may control a current supplied to the light source to emit light in a desired quantity.

According to an exemplary embodiment, the display 130 achieved by an LED type includes a panel, a light source including an LED backlight, and a driver achieved by an LED driver. However, exemplary embodiments are not limited to this. For example the light source may be achieved by an LCD backlight.

Also, exemplary embodiments are applicable to a case in which a panel includes light emitting cells including an OLED. If the panel is achieved by an OLED type, the driver may control a current supplied to each light emitting cell to cause the light emitting cell in the panel to emit light in a desired quantity.

The display 130, according to an exemplary embodiment, may display a user interface (UI) or an on screen display (OSD) including a menu item of the display apparatus 100. A user may manipulate the user input interface 140 and input a user selection while viewing a GUI displayed in the display 130.

In the display 130, according to an exemplary embodiment, a touch screen which receives an input according to a user's touch may be provided. The touch screen may be achieved by a resistive, capacitive, infrared and/or acoustic wave type, etc.

The touch screen may display an object (e.g., menu, text, image, video, diagram, icon, and shortcut icon, etc.) including a menu item of the display apparatus 100 as a UI if the display apparatus is achieved by, e.g., a mobile device. A user may touch an object displayed in a touch screen with his/her body (e.g., finger) or through a separate pointing device, e.g., a stylus, to make a user input.

The touch screen may provide a user with a GUI corresponding to various services (e.g., calls, data transmission, broadcasting, photographing, video or application providing various services). The touch screen transmits to the controller 170 an analog signal corresponding to a single touch or multi touch that is input through the GUI.

The touch according to an exemplary embodiment is not limited to a contact by a user's body or by touchable pointing device and may include a non-contact (e.g., hovering above a touch screen through a user's body or a pointing device in which the space between the screen and the user's body or pointing device is a predetermined distance, e.g., 30 mm or less). It will be appreciated by those skilled in the art that the space of the non-contact that may be sensed by a touch screen may vary depending on the performance or structure of the display apparatus 100. According to an exemplary embodiment, a touch input includes a click, drag, flick, drag &drop, tap and long tap.

The user input interface 140 transmits to the controller 170 preset various control commands or unlimited information through a user's manipulation and/or input.

The user input interface 140, according to an exemplary embodiment, includes a keypad (e.g., input panel) including a number key, menu key, and function key provided in a main body of the display apparatus 100. The user input interface 140 may further include an input device that is separated from a main body of the display apparatus 100 such as a remote control, keyboard, or mouse that generates a preset command/ data/information/ signal to remotely control a TV or monitor. The remote control may include a touch sensor for receiving a user's touch input and/or a motion sensor for sensing a motion of a user.

The input device may be an external device capable of communicating with the main body of the display apparatus 100 in a wired or wireless manner, and the wireless communication may include Bluetooth, infrared communication, radio frequency (RF) communication, wireless local area network (LAN), Wi-Fi direct, Zigbee, etc. If the input device is a keyboard or mouse, it may be connected to the display apparatus 100 in a wired or wireless manner.

The input apparatus transmits a preset command to the display apparatus 100 by being manipulated by a user.

The keypad includes at least one of a physical keypad formed in front, lateral and/or rear sides of the display apparatus 100, a virtual keypad displayed as a UI on the display 130, and a wirelessly connectable physical keypad (e.g., keyboard). The physical keypad formed in front, lateral and/or rear sides of the display apparatus 100 may include a touch button that operates by a user's touch.

It will be appreciated by those skilled in the art that the physical keypad or the buttons constituting the physical keypad may be added or excluded in accordance with the performance or structure of the display apparatus 100.

According to an exemplary embodiment, the user input interface 140 may include a touch screen formed in the display 130.

The communicator 150 includes a wired and wireless communication module for communicating with various external apparatuses including the servers 200, 300 and 400 and the input apparatus.

The communicator 150 transmits to the controller 170 a command/ data/information/ signal supplied by an external apparatus. In addition, the communicator 150 may transmit a command/data/information/signal from the controller 170 to an external apparatus.

The communicator 150 may use a wireless communication as a method of communication between the display apparatus 100 and the input apparatus.

The communicator 150, according to an exemplary embodiment, is built-in the main body of the display apparatus 100, but may be achieved with a dongle or a module detachably connected to a connector of the display apparatus 100.

The display apparatus 100, according to an exemplary embodiment, may receive an application from an external apparatus, e.g., from the content server 200, through the communicator 150. The received application is stored in the storage 160.

The display apparatus 100 may access the purchase history server 400 through the communicator 150 and confirm whether a purchase of a predetermined application has been completed. In the case of an application the purchase of which has not been completed, the display apparatus 100 accesses the payment server 300 through the communicator 150 and proceeds with a payment process.

The storage 160 stores unlimited data according to a control of the controller 170. The storage 160 may be achieved by a non-volatile storage medium such as a flash memory or a hard disc drive. The storage 160 is accessed by the controller 170 and has data read/recorded/modified/deleted/renewed by the controller 170.

The data stored in the storage 160 may, for example, include an operating system for driving the display apparatus 100, and various applications, image data, additional data, etc., executable on this operating system. In addition, the storage 160 may store coordinate information set for a touch screen, and information for identifying types of various touch inputs.

In the storage 160, according to an exemplary embodiment, user information and an application provided by the content server 200 are stored. The user information may be input through the user input interface 140.

The storage 160 may further store purchase history information regarding a user's application provided by the purchase history server 400. The storage 160 further stores security information to encrypt a payment request message to be transmitted to the payment server 400 and to decrypt a result message.

The controller 170 performs control operations with respect to various elements of the display apparatus 100. More specifically, the controller 170 controls overall operations of the display apparatus 100 and a signal flow among internal elements 120 to 160 of the display apparatus 100, and performs a data processing function. For example, the controller 170 proceeds with the image processing process performed by the processor 110, and performs control operations corresponding to a user input made through the user input interface 140 including the input apparatus, thereby controlling general operations of the display apparatus 100.

The controller 170 may detect a user's touch with respect to a touch screen of the display 130, identify a type of the detected touch input based on information stored in the storage 160 and calculate coordinate information (e.g., coordinates X and Y) corresponding to a touch position. The controller 170 controls the display 130 to display an image corresponding to the identified type of the touch input and touch position.

The controller 170 controls power supplied by a power supply to internal elements 120 to 160 of the display apparatus 100. Upon a user's input or upon satisfaction of a preset and stored condition, the controller 170 may execute an OS or various applications stored in the storage 160.

The controller 170 may include at least one processor, a read only memory (ROM) as a non-volatile memory storing a control program for controlling the display apparatus 100, and a random access memory (RAM) as a volatile memory for storing a signal or data input from the exterior or for storing various operations performed by the display apparatus 100. The processor loads a program from the ROM into the RAM for execution.

The controller 170, according to an exemplary embodiment, is achieved by at least one universal processor such as a central processing unit (CPU), an application processor (AP), a microcomputer (MICOM) or the like, and for example, runs a program loaded into the RAM by a predetermined algorithm stored in the ROM, thereby performing various operations of the display apparatus 100.

If the controller 170 of the display apparatus 100 is achieved by a single processor, e.g., a CPU, the CPU may be provided to implement various functions implementable in the display apparatus 100. For example, the CPU may provide control for various image processing processes, such as decoding, demodulating, scaling, etc., response to a command received from the user input interface 140 including an input apparatus and a touch screen; control for wired/wireless network communication with the external apparatus including the servers 200, 300 and 400 through the communicator 150.

The processor may include single, dual, triple, quad, and other multiple cores. The processor may include a plurality of processors, e.g., a main processor and a sub processor, that operates in a sleep mode (i.e., a mode in which only stand-by power is supplied and the display apparatus 100 does not operate). The processor, ROM and RAM may be connected with one another through an internal bus.

The controller 170, according to an exemplary embodiment, may further include a graphic processing unit (GPU) to process graphics. If the display apparatus 100 is achieved by one of a digital TV, smart phone and smart pad, the processor may include a GPU and for example may be achieved by a system on chip (SoC) into which a core and GPU are incorporated.

According to another exemplary embodiment, the controller 170 may include a program for performing a function supported by the display apparatus 100, e.g., for determining whether an application has been purchased, in response to an execution command for the application from the content server 200, and a chip provided as an exclusive processor for executing the foregoing program, e.g., an integrated circuit (IC) chip.

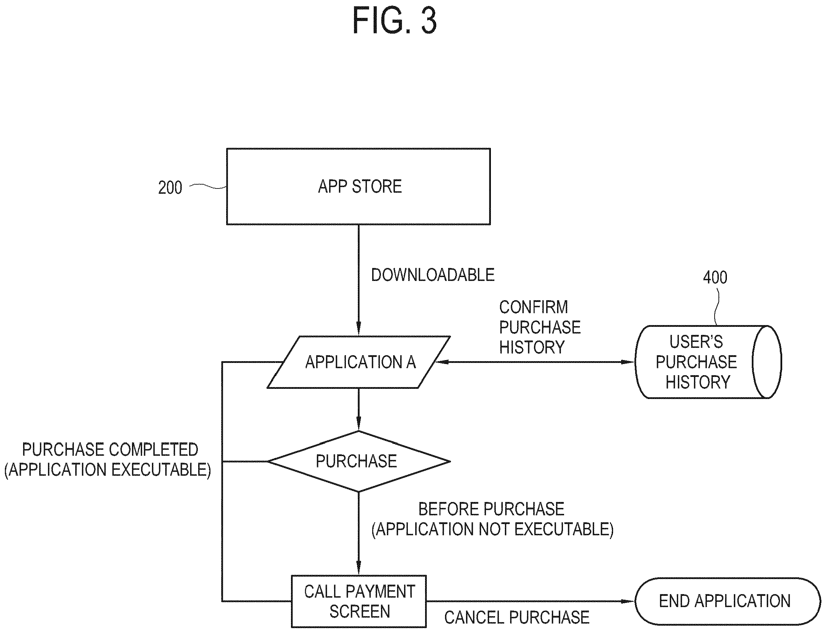

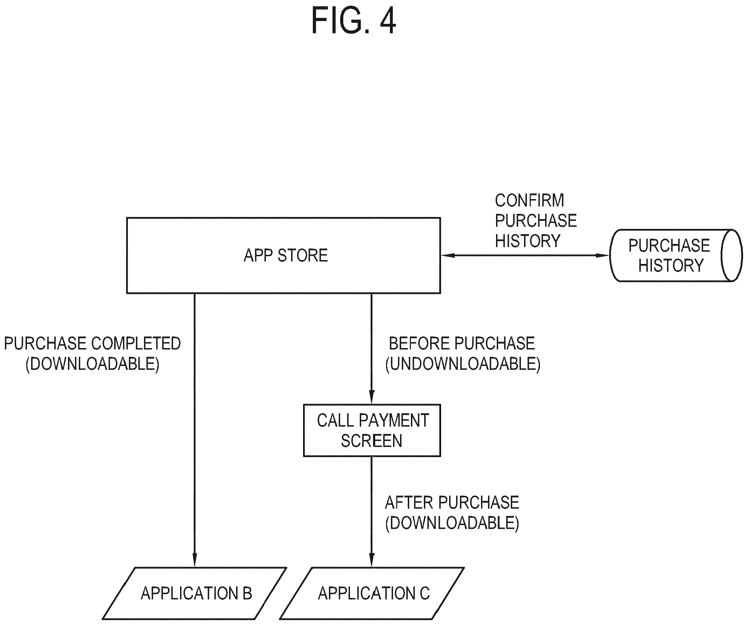

FIG. 3 illustrates an operation of the controller 170 for executing an application according to an exemplary embodiment. FIG. 4 illustrates a related art operation for executing an application in comparison with that in FIG. 3.

As shown in FIG. 3, the controller 170 of the display apparatus 100 according to an exemplary embodiment stores in the storage 160 an application received from the content server 200, i.e., from the app store through the communicator 150. The storage 160 may store an application as a file in a pre-installation state, and in response to a user's execution command, the application may be installed and executed in the display apparatus 100.

In response to a user command for selecting a predetermined application (e.g., application A) stored in the storage 160 for execution, the controller 170 determines whether a purchase of the selected application (e.g., application A) has been completed, based on a user's purchase history regarding the application. The user's purchase history may be stored in at least one of the purchase history server 400 and the storage 160.

According to a result of the determination on the purchase, the controller 170 executes the purchased application (e.g., application A) in the display apparatus 100. If the selected application has not been purchased based on the determination result, the execution of the application is unavailable.

The controller 170 may stop executing the unpurchased application, and control the communicator 150 to proceed with a payment for the application through the payment server 300. More specifically, the controller 170 calls a payment screen to proceed with the payment process for the application, and thus the called payment screen is displayed in the display 130.

If the purchase of the selected application is completed by using the payment screen, the execution of the stopped application (e.g., application A) is resumed.

The above described operation of the controller 170 according to an exemplary embodiment as shown in FIG. 3 is different from a related art operation in FIG. 4 in that, according to an exemplary embodiment, the application is always downloadable before and after the purchase.

That is, as shown in FIG. 4, a display apparatus according to a related art confirms an application purchase history while accessing the app store and may download the application (e.g., application B) only when the purchase of the application (application B) has been completed. An unpurchased application (e.g., application C) is not downloadable from the app store to the display apparatus, and thus, the display apparatus calls and displays a payment screen for a payment process, and may download the application (e.g., application C) only after the purchase of the application (e.g., application C) is completed.

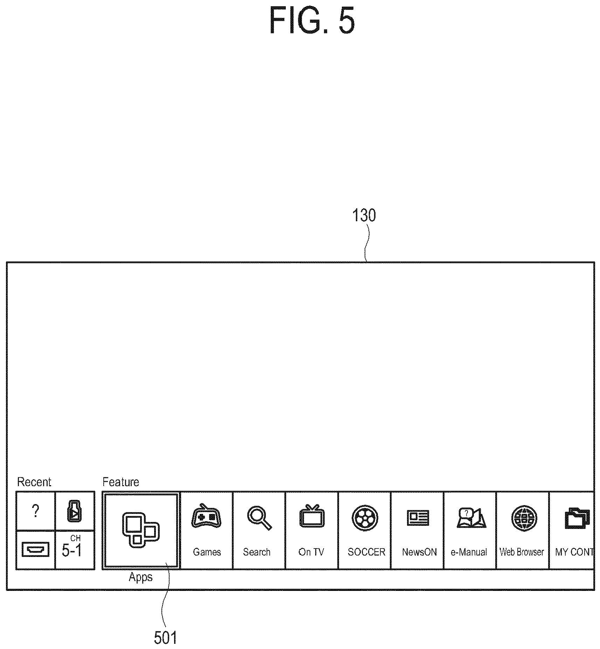

FIGS. 5 to 17 illustrate screens that are displayed by the display 130 in the process of receiving and executing an application in the display apparatus 100 according to an exemplary embodiment.

As shown in FIG. 5, a user of the display apparatus 100 according to an exemplary embodiment may select a menu item (e.g., Apps) 501 falling under an application, from an initial screen displayed in the display 130. The initial screen may be a screen that is automatically displayed if the display apparatus 100 is turned on, or a screen that is displayed by a user's predetermined manipulation, e.g., by an execution of a smart hub.

A user may search the Internet or install and use various applications through the initial screen to view photos and videos stored in an external storage medium or listen to music and use other various functions supported by the display apparatus 100.

A user may select an application item 501 by using the user input interface 140 including, e.g., an input apparatus such as a remote control. A user moves a focus to a desired item (e.g., Apps 501), out of a plurality of items by using the user input interface 140, and the controller 170 controls the display 130 to display the item 501 with a highlight by such focus in response to the user's manipulation. A user may input a user manipulation (e.g., selection of an enter button in the input apparatus) for selecting the item 501 that is focused.

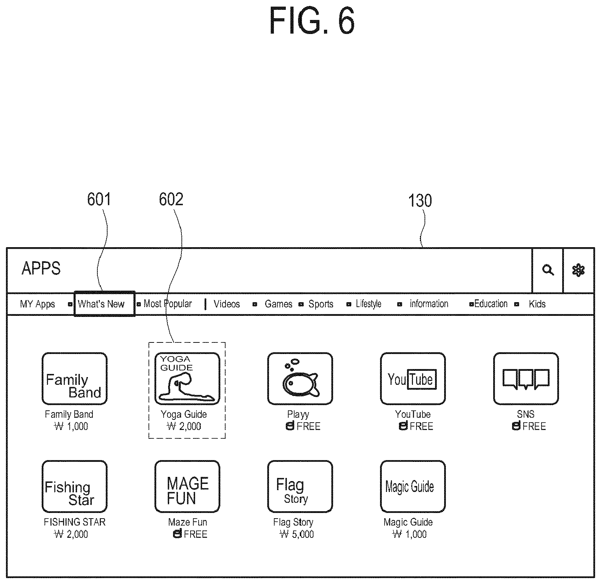

In response to the selection of the application menu item 501 in FIG. 5, the display 130 displays an application screen as illustrated in FIG. 6.

As shown in FIG. 6, at a top of the application screen, a plurality of items is displayed corresponding to an application category. The application category corresponding to the plurality of items may include My Apps, What's New, Most Popular, Videos, Games, Sports, Lifestyle, Information, Education and Kids, etc.

A user may select one of the plurality of items by manipulating the user input interface 140. A user moves a focus to a desired item (e.g., What's New item 601) out of the plurality of items by using the user input interface 140, and the controller 170 controls the display 130 to highlight the item 601 by such focus in response to the user's manipulation. A user may input a user manipulation (e.g., selection of an enter button in the input apparatus) for selecting the item 601 focused as above.

As shown in FIG. 6, in response to the selected category (e.g., What's New item 601), a list of applications that may be displayed in the display apparatus 100 is displayed in the application screen. FIG. 6 illustrates icons displayed corresponding to a list of a plurality of applications classified into the What's New item. The applications displayed in the list include free applications and paid applications.

A user may select an icon 602 of an application that he/she wishes to install in the display apparatus 100, from the list of applications in FIG. 6. For example, a user may select an icon 602 corresponding to Yoga Guide as a paid application to execute it in the display apparatus 100 as in FIG. 6.

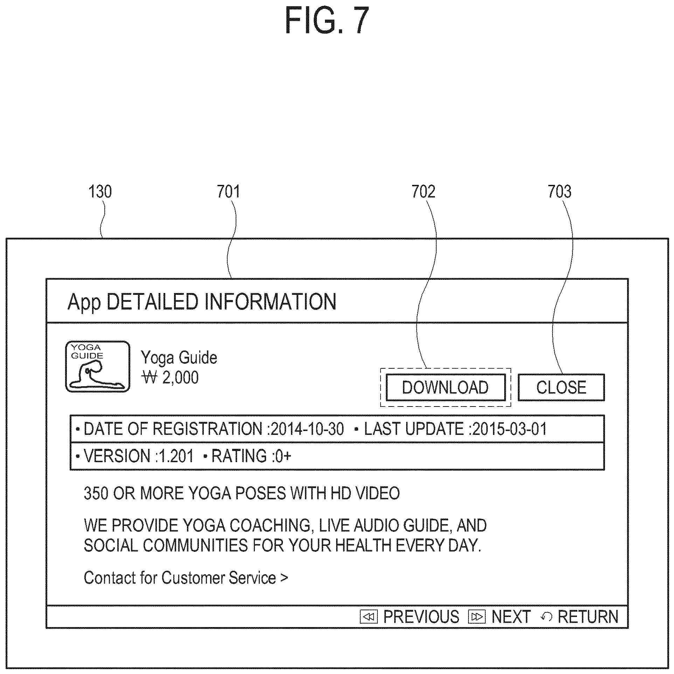

If a user selects the icon 602 of a predetermined application to execute it in FIG. 6, the controller 170 controls the display 130 to display a message 701 showing detailed information of the selected application as shown in FIG. 7. As in FIG. 7, the message 701 showing detailed information of the selected application may include a Download icon 702 and a Close icon 703.

A user may click the download icon 702 through the user input interface 140, and download, i.e., receive the application, e.g., Yoga Guide.

The controller 170 of the display apparatus 100 according to an exemplary embodiment controls the communicator 150 to receive the application from the external apparatus, e.g., from the content server 200, in response to a user's selection of downloading the application. The application that has been provided by the external apparatus through the communicator 150 is stored in the storage 160.

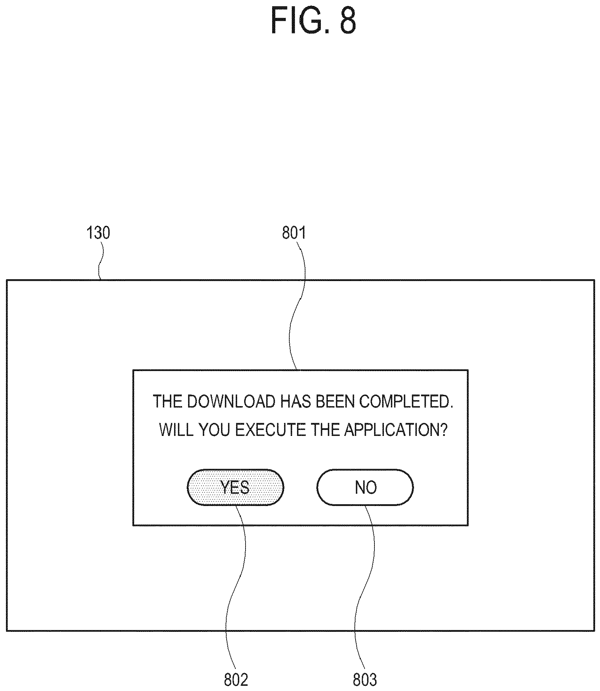

If the reception and storage of the selected application (e.g., Yoga Guide) is completed, the controller 170 may display in the display 130 a message 801 asking a user whether to execute the application stored in the storage 160 as shown in FIG. 8. The message 801 asking for the execution includes a Yes icon 802 and No icon 803 which are selectable by a user. A user may click the Yes icon 802 through the user input interface 140 and execute the application (e.g., Yoga Guide).

The controller 170 of the display apparatus 100 according to an exemplary embodiment determines whether the purchase of the selected application (e.g., Yoga Guide) has been completed based on a user's purchase history of the application, in response to a user command for selecting and executing the application.

The user's purchase history of the application may be stored in the purchase history server 400. That is, the controller 170 may access the purchase history manager of the purchase history server 400 through the communicator 150 and access application purchase information of the user account of the display apparatus 100, thereby determining whether the user of the display apparatus 100 has purchased the selected application (e.g., Yoga Guide).

The controller 170 controls to execute the application (e.g., Yoga Guide) in the display apparatus 100 only when the purchase of the application has been completed, in response to a result of a determination on the purchase or non-purchase of the application.

According to an exemplary embodiment, the user's purchase history of the application is stored in the purchase history server 400, but may be also stored in the storage 160 of the display apparatus 100 through data transmission and reception between the display apparatus 100 and the purchase history server 400.

According to an exemplary embodiment, the display apparatus 100 may access the purchase history server 400 at a predetermined interval (e.g., every 5, 12, 24 or 48 hours) and receive a user's purchase history of applications and store the user's purchase history in the storage 160. The display apparatus 100 according to another exemplary embodiment may access the purchase history server 400 in response to an occurrence of an event (e.g., power-on of the display apparatus 100), and receive a user's purchase history of applications and store the user's purchase history in the storage 160.

If the user's purchase history of applications is stored in the storage 160 of the display apparatus 100, a network communication process performed for determining the completion or non-completion of the purchase becomes unnecessary, thereby improving speed and efficiency of operations.

The controller 170 stops running the unpurchased application corresponding to the determination result regarding the completion or non-completion of the purchase. In this specification, the running of application is used as a term including installation and execution of an application.

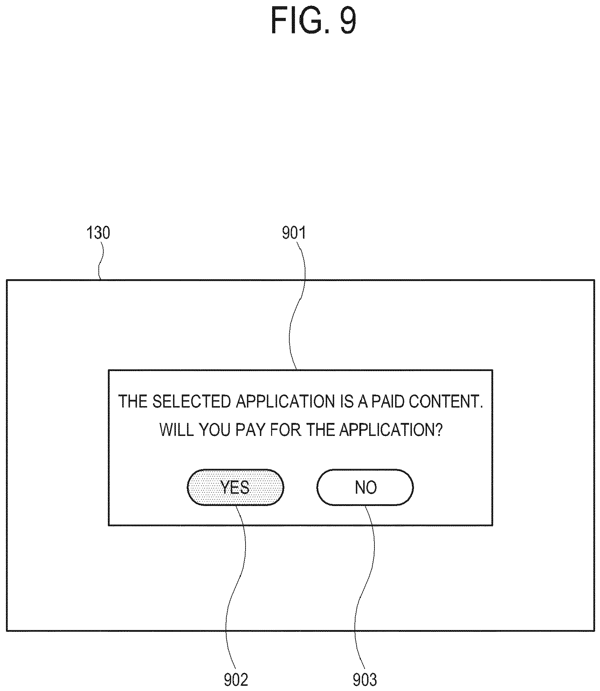

The controller may stop running the application, and display in the display 130 a message 901 asking a user whether to make payment as shown in FIG. 9. The message 901 asking for payment includes a Yes icon 902 and a No icon 903 which are selectable by a user, as in FIG. 9. A user may click the Yes icon 902 through the user input interface 140 and pay for, i.e., purchase the application (e.g., Yoga Guide).

If a user clicks the Yes icon 902 in FIG. 9, the controller 170 may control the communicator 150 to proceed with the payment for the selected application (e.g., Yoga Guide) through the payment server 300.

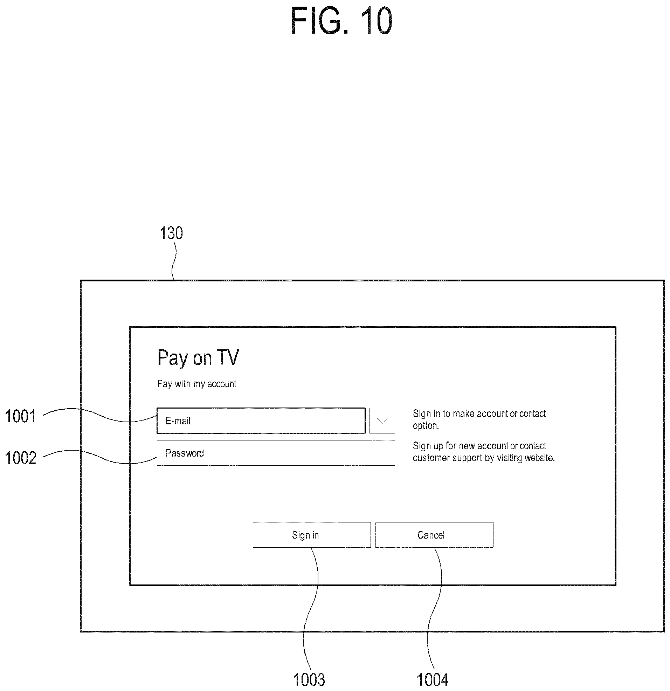

FIGS. 10 to 14 fall under payment screens displayed by the display 130 in the process of proceeding with the payment process. The payment screen may include a user interface (UI) which is capable of receiving a user's selection regarding whether to pay for the selected application for execution, and if a user selection for canceling the payment for the application is input in response to the UI, the controller 170 stops running the application.

As shown in FIG. 10, the payment screen (e.g., initial screen of the payment process) includes a user account input window 1001 and a password input window 1002 for user's log-in (e.g., sign in) to the payment system.

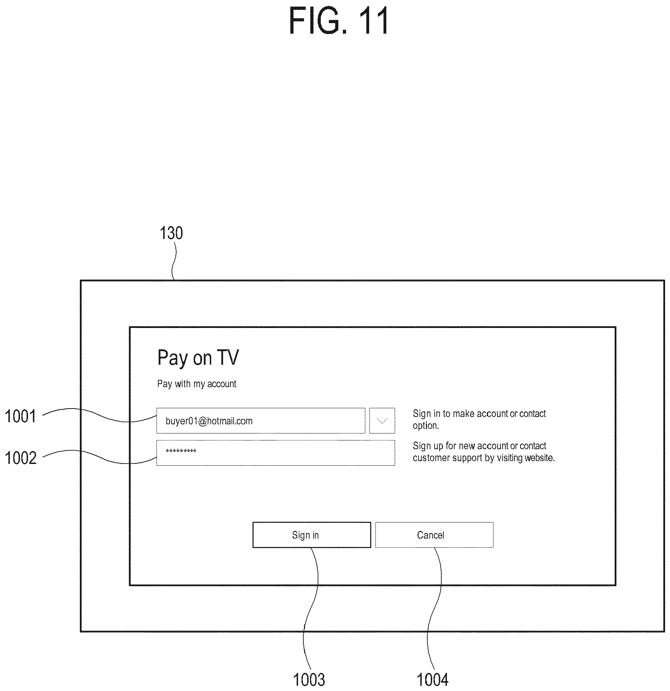

A user may input a user account and password in the input windows 1001 and 1002, click the log-in icon 1003, and select and purchase the application (e.g., Yoga Guide) by accessing the payment system as shown in FIG. 11.

If no user account exists, a user may generate a new user account from the initial screen of the payment process in FIG. 10 and log in to the payment system through the generated account. A process of generating a user account includes a process of inputting and confirming a security code used for payment. The security code includes data of predetermined bits corresponding to a predetermined payment protocol supported by the display apparatus 100 and the payment server 300.

If a user does not wish to proceed with the payment process of the application any longer in FIG. 10 or 11, he/she may click the cancel icon 1004.

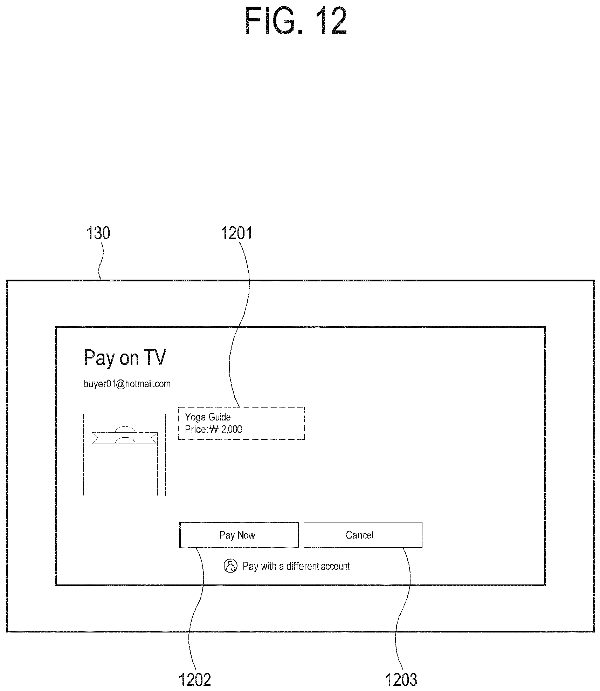

If a user log-in is performed in FIG. 11, a payment confirmation message 1201 is displayed in the display 130 for a user to select whether to purchase the selected application (e.g., Yoga Guide) as shown in FIG. 12. The purchase confirmation message 1201 may include a Pay Now icon 1202 and a Cancel icon 1203 as icons selectable by a user.

A user may click the Pay Now icon 1201 through the user input interface 140 in FIG. 12 and purchase, i.e., proceed with the payment process for the selected application (e.g., Yoga Guide).

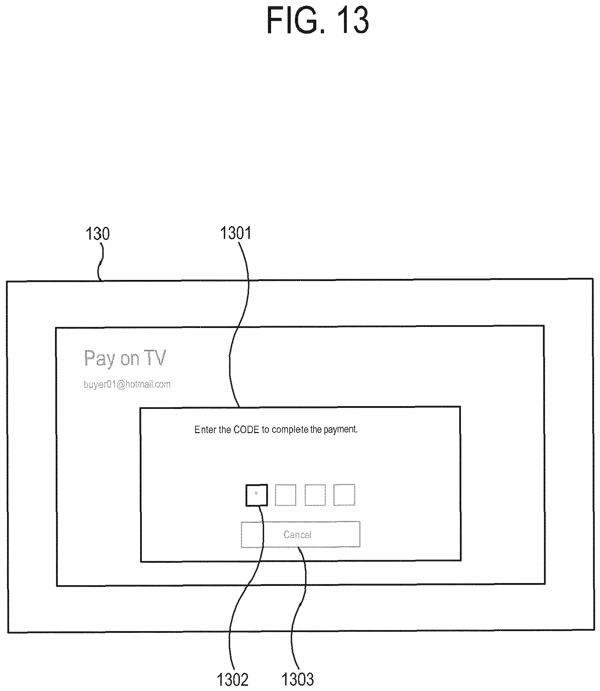

In response to the selection of the Pay Now icon 1202 in FIG. 12, the controller 170 controls the display 130 to display a code input message 1301 for a user to input a security code as shown in FIG. 13. The security code to be input may include data of predetermined bits that has been set in advance (e.g., that has been input and confirmed) in the process of generating the user account explained in connection with FIG. 10.

A user inputs a preset security code to the code input window 1302 in response to the code input message 1301 in FIG. 13, and the input security code is encrypted by a predetermined encryption module and transmitted to the payment server 300 through the communicator 150. The controller 170 may control the display 130 to limit the display of the security code which is input through the input window 1302 as in FIG. 13.

A user may click the Cancel icon 1303 of the code input message 1301 and select not to proceed with the payment for the application (e.g., Yoga Guide).

The controller 170 controls the communicator 150 to proceed with the payment for the application (e.g., Yoga Guide) through transmission and reception of data including the security code with the payment server 300.

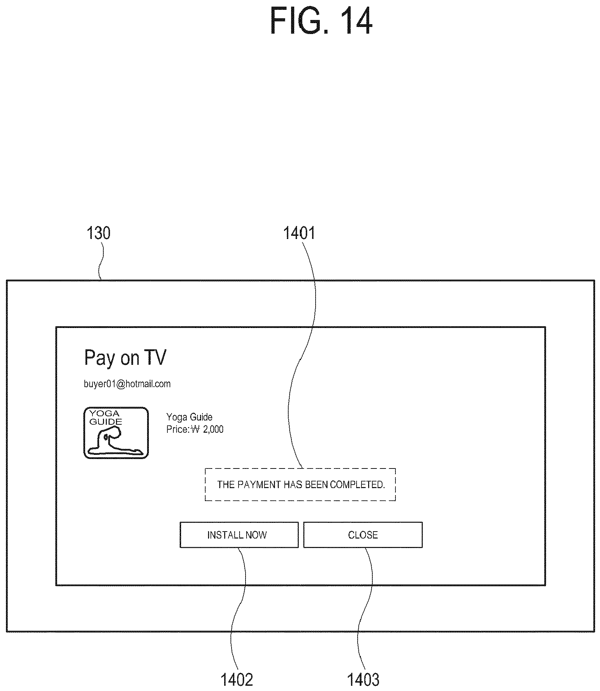

If the payment for the selected application (e.g., Yoga Guide) is completed, the display 130 may display a payment completion screen including a message 1401 showing the completion of the payment for the application as in FIG. 14.

As shown in FIG. 14, the payment completion screen may further include an Install Now icon 1402 and a Close icon 1403. A user may click the Install Now icon 1402 as in FIG. 14 and proceed with the installation of the application (e.g., Yoga Guide).

In response to the selection of the Install Now icon 1402, the controller 170 resumes the running of (e.g., re-runs) the application (e.g., Yoga Guide), the running of which was stopped, and continues to install the application.

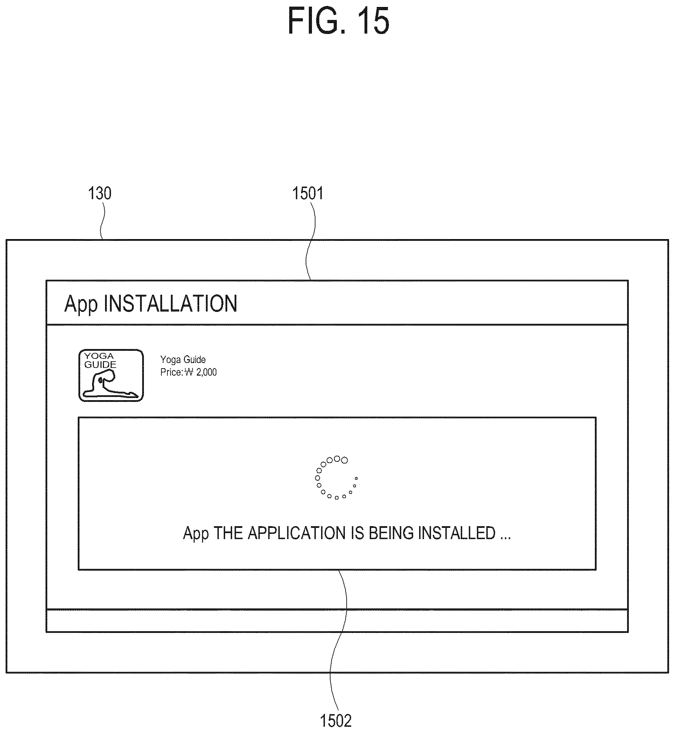

The controller 170 may control the display 130 to display an installation message 1501 of the application (e.g., Yoga Guide) as in FIG. 15. As shown in FIG. 15, the installation message 1501 may include an animation effect 1502 showing that the application is being installed to intuitively deliver the installation message 1501 to a user.

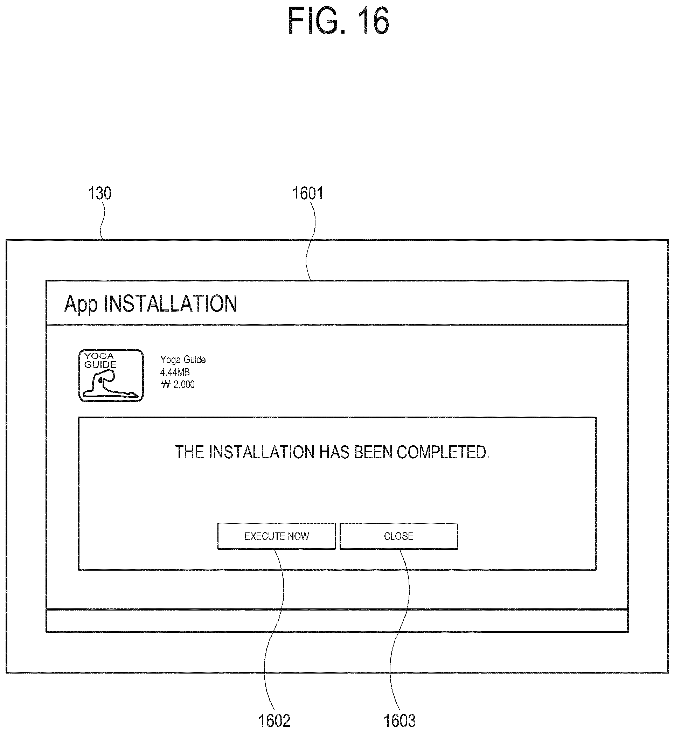

If the installation of the application (e.g., Yoga Guide) selected for execution in FIG. 6 is completed through the above process, the controller 170 may control the display 130 to display an installation completion message 1601 as in FIG. 16.

As shown in FIG. 16, the installation completion message 1601 includes an Execute Now icon 1602 and a Close icon 1603 of the application. A user may click the Execute Now icon 1602 in FIG. 16 and select to immediately execute the application (e.g., Yoga Guide).

The controller 170 commences the execution of the application in the display apparatus 100, for which payment has been completed, and a user is provided with service, e.g., various yoga guide service.

Information of the application purchased as above is added to a user's purchase history of applications managed by the purchase history server 400. The user's purchaser history includes a purchase history of paid applications including IAP and PTP.

The controller 170 may control the display 130 to display a UI corresponding to the user's purchase history of applications.

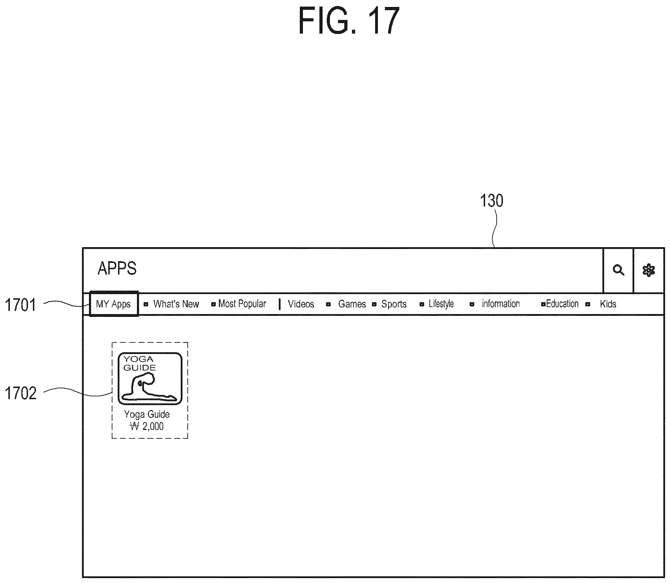

A user may select the My Apps item 1701 from the initial screen in FIG. 17 and confirm that the purchase of the application, e.g., Yoga guide application, has been completed. That is, the list of applications displayed according to the selection of the My Apps item 1701 in FIG. 17 corresponds to a user's purchase history stored and managed by the purchase history server 400.

If a user later selects and executes the application (e.g., Yoga Guide) in the display apparatus 100, the controller 170 confirms that the purchase has been completed based on a user's purchase history stored in the storage 160 or the purchase history server 400, and controls to execute the application immediately without proceeding with the payment.

According to an exemplary embodiment, the controller 170 may determine whether the application has been purchased, in response to an execution command for the application that is received initially after the application is stored in the storage 160. That is, if the payment for the application is completed at the time when the initial execution command is received, relevant information is stored in the storage 160, and thereafter, if an execution command for the same application is received, the application will be executed immediately.

In the display apparatus 100, according to an exemplary embodiment, even after a user's execution command for an application is received, the running of the application may be stopped according to a user's selection. For example, if a user selects to cancel the execution of the application (e.g., Yoga Guide) or to stop the purchase of the application (e.g., Yoga Guide) from one of the UIs in FIGS. 8 to 12, the running of the application is stopped. The file downloaded for the application, the running of which has been stopped, may be deleted according to a user's selection. The deletion or non-deletion of the downloaded file is selectable by a user.

According to one or more exemplary embodiments in FIGS. 6 to 16, the display apparatus 100 receives the selected application from the content server 200 and stores the received application, and after the completion or non-completion of the payment for the stored application is determined, the application for which the payment has been completed is installed and executed in the display apparatus 100. However, exemplary embodiments are not limited to this.

For example, the selected application may be received, stored and installed in the display apparatus 100, and then the controller 170 may determine whether the payment for the selected application has been completed and execute the selected application. That is, if a user selects the application in FIGS. 6 and 7, and selects and executes the application (e.g., Yoga Guide) in FIG. 8, the controller 170 may control to proceed with the operations in FIGS. 15 and 16 and install the application in the display apparatus 100.

Then, the controller 170 controls to proceed with the operation in FIG. 9 after the installation of the application has been completed as in FIG. 16, and to display in the display 130 a message asking a user whether to pay for the installed application. If a user selects to proceed with the payment in FIG. 9, the payment process which has been described in connection with FIGS. 10 to 14 is performed. If the payment is completed (i.e., succeeded or approved), the paid application (e.g., Yoga Guide) is executed in the display apparatus 100.

According to an exemplary embodiment, even after a user's execution command for the application is received, the running of the application may be stopped according to a user's selection (e.g., cancelation of execution or suspension of purchase). If the running is stopped according to a user's selection, the installed application may be removed from the display apparatus 100. The removal or non-removal of the application is selectable by a user.

The display apparatus 100 according to an exemplary embodiment determines whether the application, for which a user's execution command has been received, has been purchased, and stops running the unpurchased application. If the payment is completed, the running of the stopped application is resumed, and the application is executed in the display apparatus 100.

In the display apparatus 100 according to an exemplary embodiment, if the result of determining the purchase or non-purchase of the application that is made as a result of the user's selection of the execution of the application in the UI in FIG. 8 indicates that the selected application is the application for which the purchase has been completed, the controller may execute the application in the display apparatus 100 without the payment process.

According to an exemplary embodiment, the display apparatus 100 may determine the completion or non-completion of the purchase of the application, for which a user's execution command has been received, and run the unpurchased application in a modified manner. For example, a warning message which may visually disturb a user watching a content may be displayed while the application is being executed, or a color content may be blurred or displayed in black and white, or some functions of the application may be limited, or the application may otherwise be run in an incomplete manner.

According to one or more exemplary embodiments in FIGS. 6 to 16, processes are performed in response to a user's selection of the previous process, but processes may be automatically performed without displaying a UI and without a user's selection.

The drawings illustrate an example of the display apparatus 100 achieved by a smart TV, however, a mobile device such as a smart phone may also display a similar UI and execute an application after the completion of the purchase of application is determined, the payment for the application is processed, and the purchase of the application is completed in response to an execution command for the application.

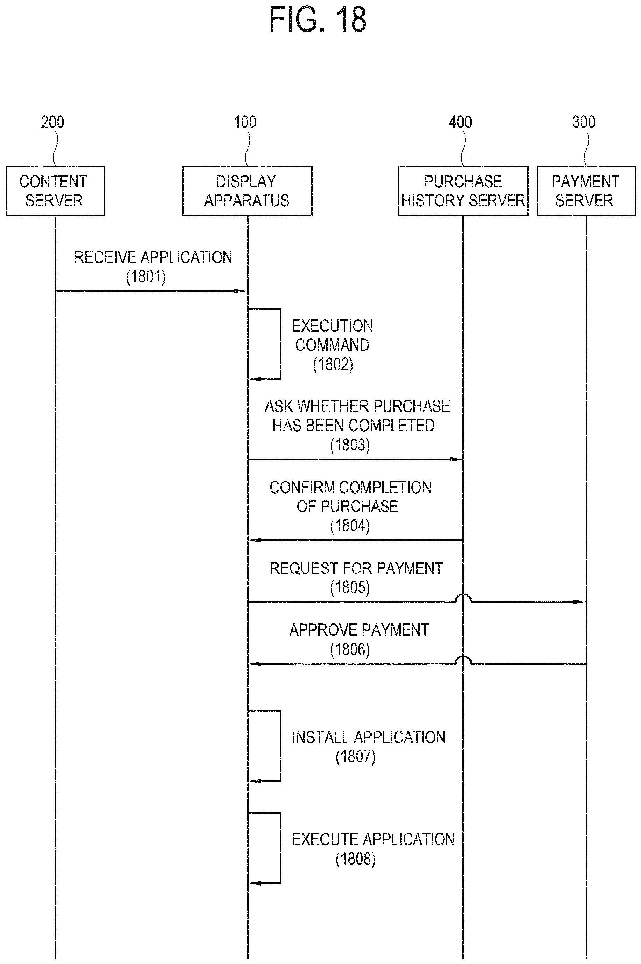

FIG. 18 illustrates an operation of the display apparatus 100 according to an exemplary embodiment.

As shown in FIG. 18, the display apparatus 100 may receive an application from the content server 200 through the communicator 150 according to a user's selection (1801). The application provided by the content server 200 maybe stored in a file format before installation in the storage 160.

The display apparatus 100 may receive a user command by a user's manipulation of the user input interface 140, for selecting and executing the received application (1802).

The controller 170 of the display apparatus 100 may control the communicator 150 to ask the purchase history server 400 whether the selected application has been purchased, in response to the received user command (1803).

The purchase history server 400 may store a purchase history of applications for a user using the display apparatus 100, and the display apparatus 100 may confirm the purchase or non-purchase based on the information provided by the purchase history server 400 in response to the inquiry about the purchase (1804).

If it is confirmed that the selected application has not been purchased, the controller 170 of the display apparatus 100 may stop running the unpurchased application, access the payment server 300 through the communicator 150 and request for payment for the application (1805).

The controller 170 may control the communicator 150 to proceed with the payment for the selected application through the payment server 300, and accordingly, the payment server 300 may approve the payment (1806).

If the payment for the unpurchased application is completed, the controller 170 controls to install the application in the display apparatus 100 (1807).

The installed application, i.e., purchased application, commences its execution in the display apparatus 100 (1808).

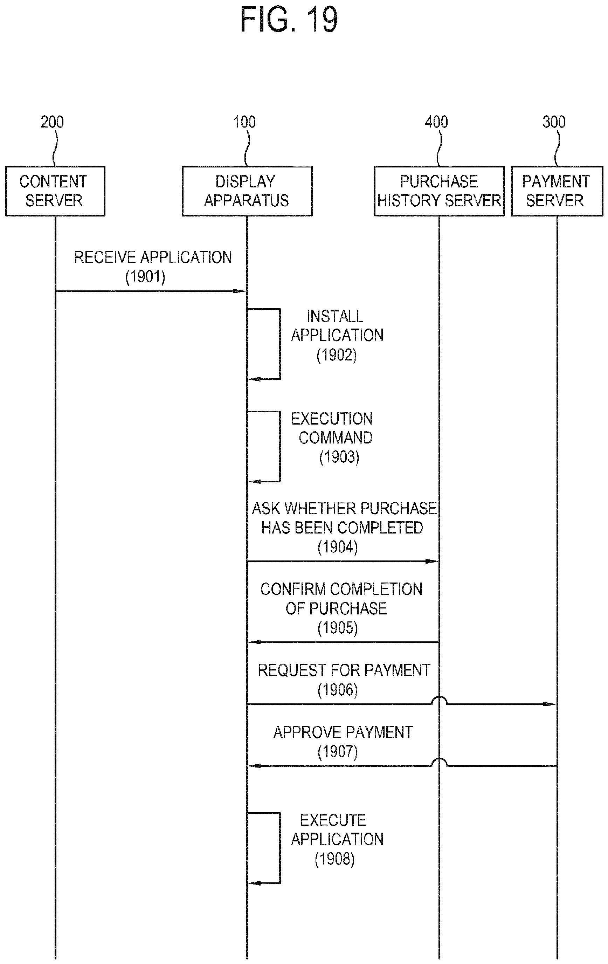

FIG. 19 illustrates an operation of a display apparatus according to another exemplary embodiment.

According to an exemplary embodiment in FIG. 19, an application provided by the content server 200 is installed and then a purchase or non-purchase of the application is asked, in comparison with an exemplary embodiment of FIG. 18.

As shown in FIG. 19, the display apparatus 100 may receive an application from the content server 200 through the communicator 150 according to a user's selection (1901).

The controller 170 controls to install the received application in the display apparatus 100 (1902).

The display apparatus 100 may receive a user command by a user's manipulation of the user input interface 140, for selecting and executing the received application (1903).

The controller 170 of the display apparatus 100 may control the communicator 150 to ask the purchase history server 400 whether the selected application has been purchased in response to the received user command (1904).

The purchase history server 400 may store a purchase history of applications for a user using the display apparatus 100, and the display apparatus 100 may confirm the purchase or non-purchase based on the information provided by the purchase history server 400 in response to the inquiry about the purchase (1905).

If it is confirmed that the selected application has not been purchased, the controller 170 of the display apparatus 100 may stop running the unpurchased application, access the payment server 300 through the communicator 150 and request for payment for the application (1906).

The controller 170 may control the communicator 150 to proceed with the payment for the selected application through the payment server 300, and accordingly, the payment server 300 may approve the payment (1907).

If the payment for the unpurchased application is completed, the installed application, i.e., purchased application, commences its execution in the display apparatus 100 (1908).

Below, a control method of the display apparatus 100 according to an exemplary embodiment will be described.

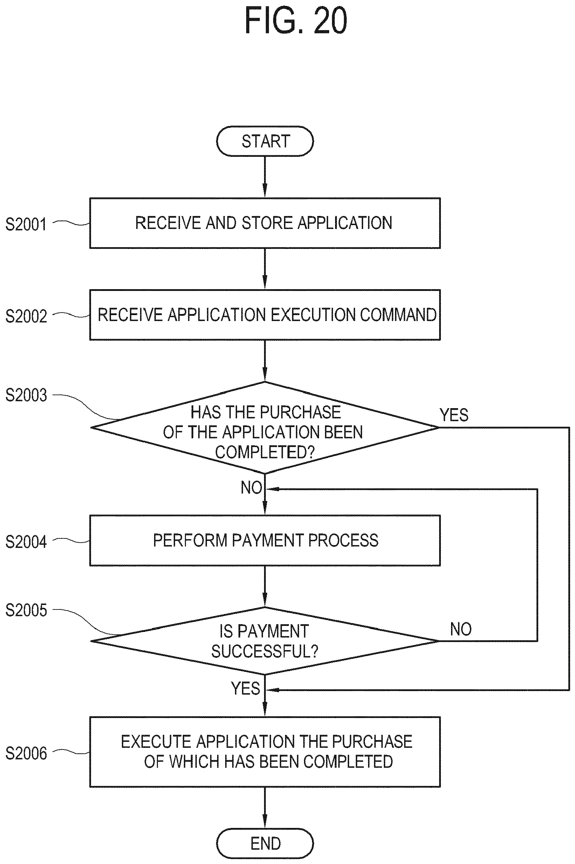

FIG. 20 is a flowchart of showing a control method of the display apparatus 100 according to an exemplary embodiment.

As shown therein, the display apparatus 100 may receive an application from the content server 200, e.g., from the external apparatus, and store the received application (S2001). A user may select the application item 501 from the initial screen of the display apparatus 100 as in FIG. 5, select the application item 602, which he/she wishes to download to the display apparatus 100, from the application screen in FIG. 6, and select the application from the detailed information screen of the selected application to receive, i.e. download the application to the display apparatus 100. The controller 170 controls the communicator 150 to receive the application to the display apparatus 100 corresponding to a user's selection.

If the application is downloaded according to the user's selection at S2001, the display apparatus 100 may receive a user's execution command for the downloaded application (S2002).If the downloading of the selected application is completed, a user may select to execute the application in response to the displayed UI as in FIG. 8.

If the user's execution command for the downloaded application is received (S2002), the controller 170 determines whether the downloaded application has been purchased, based on a user's purchase history of applications stored in the purchase history server 400 (S2003). The user's purchase history includes information regarding a user's payment for paid applications including IAP and PTP. The user's purchase history may be transmitted by the purchase history server 400 to the display apparatus 100 and may be stored in the storage 160, and the controller 170 may determine whether the application has been purchased based on the information stored in the storage 160. FIG. 17 illustrates a UI displaying a user's purchase history stored in the purchase history server 400 or the storage 160 when the Yoga Guide application falling under the PTP has been purchased.

If it is determined that the application has not been purchased at S2003, the controller 170 performs the payment process for the application selected at S2002 (S2004). That is, the controller 170 stops running the unpurchased application and controls the communicator 150 to proceed with the payment for the application through the payment server 300. During this process, the display 130 of the display apparatus 100 may display the payment screen in FIGS. 10 to 13. A user performs a user input (e.g., input of a user account, password and security code) through the user input interface 140 corresponding to the payment screens. The controller 170 accesses the payment server 300 through the communicator 150 based on the information input by a user and performs the payment process.

The display apparatus 100 may receive a payment result (e.g., approval or refusal) from the payment server 300 according to the payment process performed at S2004 (S2005). FIG. 14 illustrates a screen displayed by the display 130 if the payment result is successful.

If the payment is successful at S2005, the controller 170 executes the purchased application in the display apparatus 100 (S2006). The controller 170 may install the application received at S1201 in the display apparatus 100 and control to execute the application in the display apparatus 100. That is, a user may select to install the application immediately from the payment success screen in FIG. 14, and if the installation of the application is completed, may select to execute the application.

If the payment fails at S2005, the controller 170 may re-perform the payment process performed at S2004. In such case, the controller 170 may notify a user of the payment failure, display in the display 130 a UI for a user to select whether to re-pay for the application, and re-perform the payment process performed at S2004 in response to a user's selection from the UI.

If it is determined that the application has been purchased at S2003, the controller 170 executes the application in the display apparatus 100 (S2006).

According to an exemplary embodiment, with respect to the PTP type paid application and the IAP type paid application, if a user selects to execute the downloaded application, it is determined whether the selected application has been purchased, and only the purchased application is executed in the display apparatus.

Since the app store (e.g., content server) does not need to separately manage the purchase history of the paid applications, a cost of establishing the app store is lessened. In addition, the purchase history server which manages a user's purchase history of applications manages both IAP type and PTP type paid applications, thereby providing application developers and server managers with improved usability and convenience.

Also, in response to the user's execution command for an application, it is determined whether the purchase of the application has been completed, and only the purchased application is executed in the display apparatus. This makes the purchased paid application unusable in another device if the application is illegally copied to the another device, and ensures security.

The above exemplary embodiments may be achieved by a computer-readable recording medium. The computer-readable recording medium may include a transmission medium and a storage medium for storing data readable by a computer system. The transmission medium may be achieved by a wired/wireless network in which computer systems are connected to one another.

The above exemplary embodiments maybe achieved by hardware, software, and/or a combination of hardware and software. The hardware includes the controller 170, and the controller 170 includes a nonvolatile memory in which the software, e.g., a computer program, is stored; a random access memory (RAM) to which the computer program stored in the nonvolatile memory is loaded; and a central processing unit (CPU) for executing the computer program loaded to the RAM. The non-volatile memory may include a hard disk drive, a flash memory, a read only memory (ROM), compact disc (CD)-ROMs, magnetic tapes, a floppy disk, an optical storage, a data transmission device using Internet, etc., but is not limited thereto. The non-volatile memory is just an example of the computer-readable recording medium in which a program readable by a computer is recorded.

The computer program may be a code that can be read and executed by the CPU, and may include codes for enabling the controller 170 to perform operations including the operations S2001 to S2006 in FIG. 20.

The computer program may be involved in software including an operating system and/or applications provided in the display apparatus 100, and/or software interfacing with the external apparatus.

Exemplary embodiments have been shown and described. However, it will be appreciated by those skilled in the art that changes may be made to these exemplary embodiments without departing from the invention, the scope of which is defined in the appended claims.

## Claims

1. A display apparatus comprising:
a communicator configured to communicate with an external apparatus;
a memory configured to store an application; and
at least one processor configured to:
control the communicator to download an application from the external apparatus;
store the downloaded application in the memory;
based on a user command selecting the stored application to be executed being received, identify whether the selected application has been purchased based on a user's purchase history; and
based on the selected application being identified to be purchased, execute the selected application in the display apparatus, wherein the executed application is the application which has been stored in the memory.

2. The display apparatus according to claim 1, wherein the user's purchase history is stored in at least one of a purchase history server and the memory,
wherein the user's purchase history comprises a purchase history of a paid application comprising at least one of an In-App Purchase (IAP) and a Pay To Play (PTP).

3. The display apparatus according to claim 1, wherein the processor is further configured to, based on the selected application being identified not to be purchased, stop running the selected application, control the communicator to proceed with a payment process for the selected application through a payment server, and, based on the payment process for the application being completed, resume running the application in the display apparatus.

4. The display apparatus according to claim 3, wherein the processor is further configured to maintain the application in a stopped state in the display apparatus based on the payment process for the application failing or being cancelled.

5. The display apparatus according to claim 1, further comprising:
a display, wherein the processor is further configured to, based on the selected application being identified not to be purchased, control the display to display a payment screen for the application.

6. The display apparatus according to claim 5, wherein the payment screen comprises a graphical user interface (GUI) that is capable of receiving a user selection for payment or non-payment for the selected application, and the processor is further configured to, based on a user selection for non-payment for the selected application being received, stop running the selected application.

7. The display apparatus according to claim 1 or claim 2, further comprising:
a display, wherein the processor is further configured to control the display to display a graphical user interface (GUI) corresponding to the user's purchase history.

8. The display apparatus according to any one of the preceding claims, wherein the external apparatus comprises:
a content server configured to store a plurality of applications;
a purchase history server configured to store a purchase history of applications per user; and
a payment server configured to support a payment process for the application,
wherein the processor is further configured to control the communicator to receive the selected application from the content server.

9. The display apparatus according to any one of the preceding claims, wherein the processor is further configured to, based on, after the application is stored in the memory, the user command selecting the application to be executed being received, identify whether the selected application has been purchased.

10. A control method of a display apparatus, the method comprising:
downloading an application from an external apparatus;
storing the downloaded application in a memory;
based on a user command selecting the stored application to be executed being received, identifying whether the selected application has been purchased based on a user's purchase history; and
based on the selected application being identified to be purchased, executing the selected application in the display apparatus, wherein the executed application is the application which has been stored in the memory.

11. The control method according to claim 10, wherein the user's purchase history is stored in at least one of a purchase history server and the memory,
wherein the user's purchase history comprises a purchase history of a paid application comprising at least one of an In-App Purchase (IAP) and a Pay To Play (PTP).

12. The control method according to claim 10, further comprising:
based on the selected application being identified not to be purchased, stopping running the application and proceeding with a payment process for the selected application through a payment server; and
based on the payment process for the application being completed, resuming running the application in the display apparatus.

13. The control method according to claim 12, further comprising:
maintaining the application in a stopped state in the display apparatus based on the payment process for the application failing or being cancelled.

14. The control method according to claim 10, further comprising:
displaying, based on the selected application being identified not to be purchased, a payment screen for the application.

15. The control method according to claim 14, wherein the payment screen comprises a graphic user interface (GUI) that is capable of receiving a user selection for payment or non-payment of the selected application, and further comprising:
based on a user selection for non-payment for the selected application being received, stopping running the selected application.
